# EUROPEAN PATENT APPLICATION

(11) **EP 2 294 927 A1**
(43) Date of publication of application: **16.03.2011**
(21) Application number: 10176407.4
(22) Date of filing: 13.09.2010
(51) Int. Cl.: A23C 11/10, A23L 1/38

(54) **Non-dairy, nut-based milk, and method of production**

(30) Priority: 11.09.2009 US 241765 P; 12.04.2010 US 758304
(71) Applicant: WhiteWave Services, Inc., Dallas TX 75204 (US)
(72) Inventor: McCready, Stephen A., Arvada, CO 80005 (US)
(74) Representative: Lawrence, John

(57) **Abstract**

A method for making non-dairy, nut-based milk is disclosed. The method includes mixing water and nut butter. A dry blend is added that includes one or more hydrocolloids selected from the group consisting of: gellan gum, guar gum, locust bean gum, and xanthan gum. The dry blend further includes one or more salts. The non-dairy, nut-based milk is substantially free of soy or soy-derived ingredients.

## Description

### RELATED APPLICATION

This application claims the benefit under 35 U.S.C. § 119(e) of U.S. Provisional Application Serial No. 61/241,765 filed September 11, 2009.

### TECHNICAL FIELD

This disclosure relates generally to beverages, and more specifically to non-dairy, nut-based milk and methods of producing the same.

### BACKGROUND

Consuming dairy milk provides a multitude of health benefits. Dairy milk may provide calcium, protein, and additional vitamins. Various non-dairy milk products exist, such as, for example, soy-based milk having soy-derived ingredients. For example, U.S. Patent Nos. 6,153,247 and 6,123, 976 disclose "Nut butter beverage" and "Process for producing beverages from nut butter and the product therefrom," respectively. However, some people do not consume dairy products or milk derived from soy for reasons related to digestion, allergies, or aversion to genetically modified organisms (GMO). Additionally, some non-dairy milk may have less than desirable taste, mouth feel (*e.g*., gritty or grainy texture), and shelf life.

### SUMMARY OF EXAMPLE EMBODIMENTS

The present disclosure is directed to a non-dairy nut milk formulation and a method of producing the same. In various embodiments, the teachings of the present disclosure may allow for stable, non-dairy, nut-based milk that may be substantially or entirely free of soy or soy-derived ingredients.

In accordance with a particular embodiment of the present disclosure, a method for making non-dairy, nut-based milk is disclosed. The method includes mixing water and nut butter and adding a dry blend that includes one or more hydrocolloids selected from the group consisting of: gellan gum, guar gum, locust bean gum, and xanthan gum. The dry blend further includes one or more salts. The non-dairy, nut-based milk is substantially free of soy or soy-derived ingredients.

Technical advantages of particular embodiments of the present disclosure include creating a stable, nut-based milk substitute that may be substantially or entirely free of soy or soy-derived ingredients. Particular embodiments may provide enhanced quality control while reducing product variation. Further technical advantages of particular embodiments include the production of a beverage with extended shelf life, along with a desirable flavor and mouth feel.

Other technical advantages of the present disclosure will be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the present invention and for further features and advantages thereof, reference is now made to the following description taken in conjunction with the accompanying drawings, in which:
**FIGURE 1** is one example of a block diagram illustrating a batching system for making a beverage that includes nut butter according to a particular embodiment; and
**FIGURE 2** is an example flow diagram illustrating a method for making non-dairy, nut-based milk according to particular embodiments.

### DETAILED DESCRIPTION

Particular embodiments disclosed herein include creating stable, nut-based, non-dairy milk that may be substantially or entirely free of soy or soy-derived ingredients. Additionally, particular embodiments include the production of a substantially soy-free, non-dairy, nut-based beverage with extended shelf life, along with a desirable flavor and a mouth feel similar to dairy milk. The term "nut" as used herein generally refers to any type of human-edible dry fruit in which the ovary wall becomes very hard (stony or woody) at maturity, and where the seed remains unattached or unfused with the ovary wall. For example, filbert hazelnuts, chestnuts, and pecans may be considered nuts in the botanical sense of the term. In addition, the term "nut" as used herein also generally refers to fruits, and even seeds, that may not be botanically qualified as nuts, but that may have a similar appearance and culinary role. For example, almonds, Brazil nuts, cashews, walnuts, coconut, breadnuts, macadamia nuts, peanuts, pine nuts, and pistachios may be considered nuts in a culinary sense of the term. The example nuts disclosed herein are not intended to be an exhaustive list of all possible nuts that may be used in various embodiments.

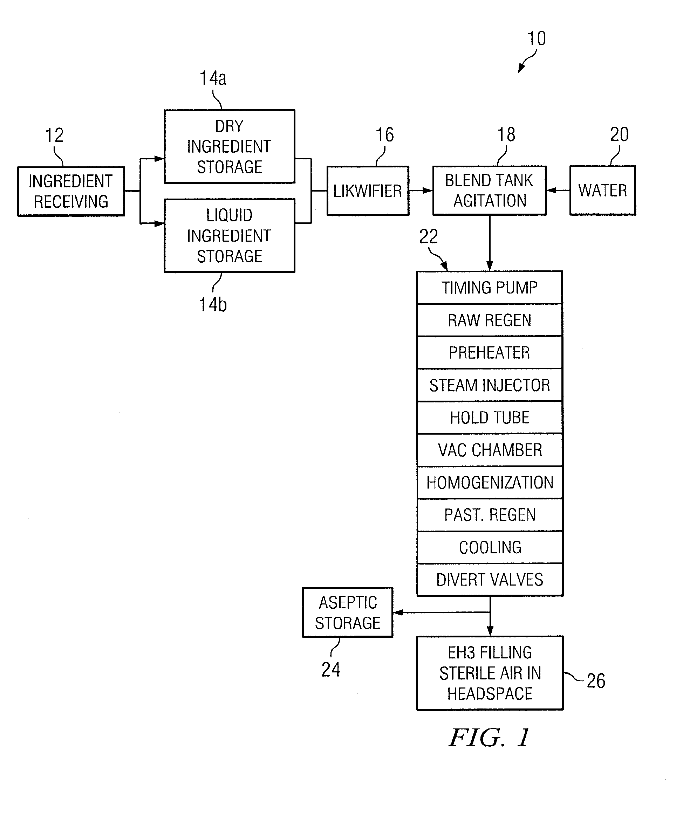

FIGURE 1 is one example embodiment of a block diagram illustrating a batching system 10 for making a beverage that includes nut butter. In particular embodiments, the beverage produced by batching system 10 may be substantially or entirely free of soy or soy-derived ingredients. In this example, batching system generally includes a receiving module 12, storing modules 14, a likwifier 16, a blend tank 18, a water module 20, a processing module 22, aseptic storage 24, and a filling module 26.

In this example, receiving module 12 generally receives ingredients, which may be stored in either a dry ingredient storage module 14a or a liquid ingredient storage module 14b according to the nature of the ingredients. In various embodiments, the likwifier 16 may be capable of mid to high sheer mixing, liquefying ingredients, and/or cycling the ingredients to and from the blend tank 18. The blend tank 18 is generally capable of receiving water from water module 20 (*e.g*., a water tank), and receiving and cycling liquefied ingredients to and from likwifier 16. The blend tank 18 may be further capable of blending ingredients at lower speeds than likwifier 16 and/or subjecting contents to an agitation cycle. TABLES 1 through 7 below are example formulas illustrating particular ingredients that may be mixed by the batching system of FIGURE 1 to make a beverage that includes nut butter according to various embodiments.

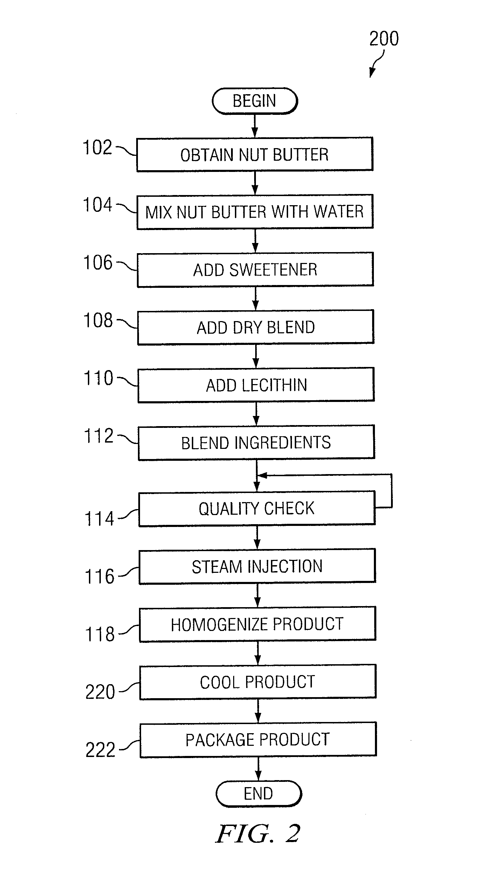

The processing module 22 illustrated in Figure 1 is generally capable of: preheating the product blended by blend tank 18, exposing the product to steam injection and homogenization, cooling the product, and communicated the cooled product to aseptic storage 24. The filling module 26 is generally capable of bottling or packaging the stored product in preparation for distribution. Although batching system 10 includes a number of elements or modules in this example, other embodiments may include one or more of these or other elements, or may exclude these elements without departing from the scope of the present disclosure. FIGURE 2 is one example of a flow diagram 200 illustrating a method for making a beverage that includes nut butter according to a particular embodiment. The method begins at step 102 by producing nut butter using one or more species of nuts. In this example, the nut butter comprises almond-based nut butter. Although this example uses almond nut butter, other embodiments may use any other desired nut or combination of nuts to produce nut butter or some other form of a nut-based paste without departing from the scope of the present disclosure.

In other embodiments, the nut butter may include one or more of the following nuts: almonds, pistachios, hazelnuts, pine nuts, cashews, walnuts, pecans, peanuts, Brazil nuts, Macadamia nuts, breadnuts, chestnuts, coconuts, and/or some other edible nut. For example, combinations of nuts may be used to produce nut butter based on a desirable balance of fat content, taste, butter consistency, and nutrients provided. In particular embodiments, nuts with a natural skin may be blanched to facilitate removing the skin as part of the nut butter production and/or to protect integrity (*e.g*., by inactivation of undesirable enzymes). The selected nut or combination of nuts may, for example, be dry or oil roasted and ground to a paste comprising a desired granular size. If multiple nut species are used, each nut species may be separately roasted and ground. In other embodiments, one or more of the multiple nut species can be roasted and ground together. Although this example uses nut butter, other embodiments can use nut paste, nut puree, nut flour, and/or any other ground or liquefied form of nut as a nut butter.

In step 104, the nut butter is mixed with water. In particular embodiments, the process of mixing the nut butter with water may include cycling the mixture of water and nut butter between blend tank 18 and likwifier 16 of batching system 10. According to one embodiment, water is metered into likwifier 16 first, followed by the nut butter. In some cases, at least some of the water and nut butter may be added simultaneously to batching system 10 while the ingredients are mixed in likwifier 16 and/or cycled between likwifier 16 and blend tank 18. The water may, for example, comprise approximately 70% to 99% of the total weight or volume of the batch mixture after all ingredients are added.

In step 106, sweeteners and/or other flavorings may be added to the batching system. In various embodiments, for example, natural evaporated sugar cane juice may be added to the batching system in step 106. However, other embodiments may be entirely or substantially free of sugar and/or may include one or more sugar substitutes. In a particular embodiment, for example, one or more stevia extracts (*e.g*., Rebaudioside A) may be added in addition to or in lieu of sugar, as shown in several example formulations below. Certain embodiments may add other types of flavorings to batching system 10 in step 106. For example, particular embodiments may include one or more of the following sweeteners and/or flavorings: sugar cane juice, stevia extract, vanilla flavoring, strawberry flavoring, fruit flavoring, chocolate flavoring (*e.g*., cocoa powder), and/or some other suitable natural or artificial sweetener and/or flavoring. The term "flavoring" as used herein generally refers to any substance that may be safely used in food, the function of which is to impart flavor.

In step 108, a dry blend may be added to the batching system. In a particular embodiment, the dry blend is stored at dry ingredient storage 14a at a temperature less than approximately 85 degrees Fahrenheit and added to the batching system via likwifier 16. According to various embodiments, the dry blend may be a powder mixture that includes one or more health-related supplements, one or more salts, and/or one or more hydrocolloids.

In some embodiments, the health-related supplements of particular dry blends may include one or more of the following: calcium carbonate (CaCO3), vitamin A, vitamin B2, vitamin B12, vitamin D, vitamin E, zinc, fiber, protein, potassium, phosphorus, fatty acids, (e.g., omega 3, omega 6, etc.), oligosaccharide, and/or any other suitable health-related supplement. In various embodiments, the one or more health-related supplements may be selected based at least in part on a neutral-taste quality that may have little or no impact on the overall taste of the product. In particular embodiments, the addition of the salts of potassium and phosphate ions may provide both a source of both potassium and phosphorus. In some embodiments, fiber may be provided by the addition of dextrin (*e.g*., Nutriose), polydextrose, and/or some other suitable dietary or non-dietary fiber source.

In some alternative embodiments, one or more protein-based supplements may optionally be added in step 108. In particular embodiments, the one or more protein-based supplements comprise a protein that is substantially free of soy-protein, such as, for example yellow pea protein, potato protein, and/or any other suitable non-soy protein-based supplement. In another embodiment, a soy-derived protein may be added, which in some cases may not only provide an additional source of protein but may also be used in place of a lecithin, such that no lecithin is added to the product apart from the what may naturally appear within the soy-derived protein. In other embodiments, a soy-derived protein may be added in combination with a lecithin.

In particular embodiments, the one or more salt agents of various dry blends may include one or more of the following: sea salt (*e.g*., sodium chloride), a potassium phosphate (*e.g*., monopotassium phosphate (KH2PO4), dipotassium phosphate (K2HPO4), tripotassium phosphate (K3PO4) etc.), a sodium phosphate *(e.g*., disodium phosphate (Na2HPO4)), a calcium phosphate (*e.g*., tricalcium phosphate Ca3(PO4)2), and/or any other suitable emulsifying, flavoring, stabilizing, and/or buffering agent or combination of agents. As shown in several example formulations below, particular salt combinations may improve dispersion of the non-soy based protein, provide enhanced product stability, and round out the flavor profile. In certain embodiments, the one or more salt agents of various dry blends may be substantially free of buffering salts.

In some embodiments, the hydrocolloids of particular dry blends may include one or more of the following: pectin, any suitable starch, gellan gum, xanthan gum, locust bean gum (LBG), guar gum, and/or any other hydrocolloid. In some cases, the particular hydrocolloid or combination of hydrocolloids optionally added in step 108 may be chosen for properties other than, or in addition to, stabilization. For example, some hydrocolloid(s) may contribute to optimal suspension, mouth feel, or some other desirable feature. As shown in several example formulations below, the hydrocolloids optionally added in step 108 may include gellan gum and locust bean gum pre-blended at approximately a 25/75 ratio by weight or volume.

Although particular example embodiments are described as optionally including one or more health-related supplements, one or more salts, and/or one or more hydrocolloids, the dry blend added in step 108 may include various alternative or additional ingredients. Additionally, although a dry blend is used in this example, in alternative embodiments one or more of the ingredients added in step 108 may be introduced to batching system 10 separately from the other ingredients of step 108 and/or one or more of the ingredients added in step 108 may be introduced to batching system 10 in a form other than a dry powder (*e.g*., in a liquid form).

In particular embodiments, using pre-mixed dry blends in step 108 may provide enhanced quality control while reducing product variation. For example, premixing ingredients of a dry blend may mitigate clumping, incomplete dispersion, and/or incomplete hydration that might otherwise occur if particular ingredients are added individually to a batching system. Additionally, if multiple ingredients are introduced as a pre-mixed dry blend then it may not be necessary to measure and introduce into a batching system each ingredient individually. Some pre-mixed dry blends may be readily transported, stored, divided, measured, and/or added to mixtures in highly controlled quantities with minimal waste. Furthermore, the exact composition of particular dry blends in terms of individual ingredients and their respective percentage weights may not be readily determinable if these ingredients are pre-mixed in a controlled setting.

In step 110, one or more lecithins may be introduced to batching system 10. According to one embodiment, a lecithin may be used in step 110 that is substantially or entirely free of soy or soy-derived ingredients. In a particular embodiment, one or more soy-free lecithins, including a sunflower-based lecithin, may be used. Using one or more substantially soy-free lecithins may, in certain embodiments, enable increasing the percentage content of a more neutral-tasting lecithin beyond thresholds for soy-derived lecithins at which a percentage increase in the soy-derived lecithin may negatively affect taste and/or mouth feel. Although various embodiments may add a lecithin that is substantially or entirely free of soy or soy-derived ingredients, alternative embodiments may use one or more alterative lecithins or no lecithin. Embodiments that are substantially or entirely free of soy or soy-derived ingredients may enable production of a non-dairy milk that may be consumed, for example, by those who do not consume dairy products or soy products for reasons related to digestion, allergies, taste, and/or other reasons. Additionally, unlike non-dairy milk products that contain a lecithin derived at least partially from genetically modified soy beans or some other genetically modified organism (GMO), particular embodiments may use one or more lecithins that are not derived from genetically modified organisms. Other embodiments may be substantially or entirely free of lecithin.

In embodiments including one or more non-soy or non-GMO-based lecithins in powder form, the lecithin(s) may alternatively be included within the dry blend of step 108. In particular embodiments, however, the lecithin optionally added in step 110 may be in liquid form and may have a high enough viscosity to justify adding the lecithin(s) in a separate step, which in some cases may enhance dispersion.

Once the selected ingredients of steps 102-110 are added, the combined mixture or the "product" may be allowed to blend in step 112 for three to ten minutes (*e.g*., five minutes) or any other suitable duration of time. According to one embodiment, the blending in step 112 may include circulating the product between likwifier 16 and blend tank 18 of batching system 10. Additionally, the blending in step 112 may further include a low-speed agitation for an additional five to fifteen minutes (*e.g*., ten minutes) or any other suitable duration of time. In particular embodiments, blend tank 18 of batching system 10 may be capable of performing the optional low-speed agitation.

In step 114, a quality check may be performed. For example, a product sample may be pulled from blend tank 10 and analyzed for solids, fat content, proper pH balance, levels of vitamins and nutrients, consistency, etc. The results of this quality check may be used, for example, to make a variety of adjustments for optimization purposes or quality control. For example, if it is determined that the product sample contains solids that exceed a quantity and/or granularity threshold, additional mixing may be performed, additional agitation may be performed, and/or additional water may be added and mixed with the contents of the batching system. Example granularity thresholds may include 0.008 inches, 0.0018 inches, or any other suitable larger or smaller granularity threshold. As another example, if it is determined that the product sample contains solids that are less than a quantity and/or granularity threshold, solids may be added to the product (*e.g*., in the form of sugar, nut butter, and/or some other ingredient). Step 112 may be repeated until it is determined that the product meets a predetermined quality standard.

In step 116, the product may be processed through a direct steam injection processor. In particular embodiments, the product may be pumped through a pre-heater, which may raise the product temperature from about 35 to 70 degrees to within the range of 150 to 200 degrees Fahrenheit (*e*.*g*., 174 degrees Fahrenheit). The pre-heated product may then flow through stainless steel tubing, where steam may be directly injected into the product as it flows. The tubing may have a specified length based on the flow rate to achieve a product temperature within the range of 250 and 300 degrees Fahrenheit (*e.g*., 284 degrees Fahrenheit). After processing through a direct steam injection processor, the product may be introduced to a flash chamber that removes substantially all of the steam that may have been added in step 114. Although direct heat is used in this example, indirect heat may be used (*e.g*., heat transfer through indirect plates, tube-in-tube, tube-in-shelf, etc.).

In step 118, the product is homogenized. In a particular embodiment, homogenization may be accomplished by passing the product under high pressure through a small orifice. For example, the product may be exposed to a maximum homogenization pressure of approximately 500 to 4000 pounds per square inch (psi) (*e.g*., 3000); however, any suitable maximum pressure may be used. In various embodiments, homogenization may be accomplished using two stages, each with a different pressure (*e.g*., approximately 2000 psi at a second stage and approximately 500 psi at a first stage). In an alternative embodiment, an ultrahigh homogenization pressure (UHP) may be used. For example, the product may be exposed to a maximum homogenization pressure of approximately 25,000 psi. Exposing the product to UHP processing may, in some cases, provide stabilizing properties to the product in a manner similar to some hydrocolloids. Thus, particular embodiments using UHP processing may be substantially or entirely free of hydrocolloids.

In step 120, the product is cooled to a temperature within the range of 32 to 45 degrees Fahrenheit. The product may then be transferred to an aseptic tank cooler (*e.g*., aseptic storage 24) until it is called to a filler system (*e.g*., filling module 26) for bottling or packaging in preparation for distribution. In a particular embodiment, the product may remain in the ascetic tank at a temperature less than approximately 45 degrees Fahrenheit for a duration that should not to exceed 35 to 40 hours (*e.g*., 36 hours in this embodiment). Although a temperature of less than approximately 45 degrees and a hold time of approximately 35 to 40 hours are used in this example, other desired temperatures and hold times could be used without departing from the scope of the present disclosure.

In step 122, the product may be introduced into, and enclosed within, sanitized containers. In particular embodiments, the product may be sealed within a single-serve package (*e.g*., a package containing 3-20 fluid ounces); bag-in-box (*e.g*., a pouch within a box), pint-sized, half-gallon, full-gallon containers, and/or some other suitable container.

Example formulations that may be used to produce non-dairy, nut-based milk according to various embodiments are described further below with reference to TABLES 1 through 8. Each of the example formulations shown in TABLES 1 through 8 is substantially or entirely free of soy or soy-derived ingredients.

**TABLE 1**

| | % |
|---|---|
| Nut Butter | 2 |
| Water | 94.265 |
| Sugar | 3 |
| CaCO3 | 0.2948 |
| VitA | 0.00102 |
| VitD | 0.00012 |
| VitE | 0.0125 |
| Dipotassium | |
| Phosphate | 0.1113 |
| Salt | 0.155 |
| Gellan Gum | 0.03 |
| Locust Bean Gum | 0.09 |
| Sunflower Lecithin | 0.04 |
| | 100 |

**2**

| | % |
|---|---|
| Nut Butter | 2 |
| Water | 90.84771 |
| Sugar | 6.3 |
| CaCO3 | 0.29235 |
| VitA | 0.00102 |
| VitD | 0.00012 |
| VitE | 0.0125 |
| Dipotassium | 0.1113 |
| Phosphate | |
| Salt | 0.155 |
| Gellan Gum | 0.03 |
| Locust Bean Gum | 0.09 |
| Sunflower Lecithin | 0.04 |
| Stevia Extract | 0 |
| Vanilla Flavor | 0.12 |
| | 100 |

**TABLE 3**

| | % |
|---|---|
| Nut Butter | 2 |
| Water | 95.25101 |
| Sugar | 2 |
| CaCO3 | 0.2948 |
| VitA | 0.00102 |
| VitD | 0.00012 |
| VitE | 0.0125 |
| Tricalcium Phosphate | 0.12 |
| Salt | 0.155 |
| Gellan Gum | 0.03 |
| Locust Bean Gum | 0.09 |
| Sunflower Lecithin | 0.04 |
| Stevia Extract | 0.00555 |
| Vanilla Flavor | 0 |
| | 100 |

**TABLE 4**

| | % |
|---|---|
| Nut Butter | 2 |
| Water | 92.55971 |
| Sugar | 4.582 |
| CaCO3 | 0.29235 |
| VitA | 0.00102 |
| VitD | 0.00012 |
| VitE | 0.0125 |
| Dipotassium | |
| Phosphate | 0.1113 |
| Salt | 0.155 |
| Gellan Gum | 0.09 |
| Locust Bean Gum | 0.03 |
| Sunflower Lecithin | 0.04 |
| Stevia Extract | 0.006 |
| Vanilla Flavor | 0.12 |
| | 100 |

**TABLE 5**

| | % |
|---|---|
| Nut Butter | 2 |
| Water | 94.338 |
| Sugar | 3 |
| CaCO3 | 0.268 |
| VitA | 0.00155 |
| VitD | 0.00085 |
| VitE | 0.01 |
| Dipotassium | |
| Phosphate | 0.1112 |
| Salt | 0.155 |
| Gellan Gum | 0.03 |
| Locust Bean Gum | 0.09 |
| Sunflower Lecithin | 0 |
| Stevia Extract | 0 |
| Vanilla Flavor | 0 |
| | 100 |

**TABLE 6**

| | % |
|---|---|
| Nut Butter | 2 |
| Water | 94.338 |
| Sugar | 3 |
| CaCO3 | 0.268 |
| VitA | 0.00155 |
| VitD | 0.00085 |
| VitE | 0.01 |
| Dipotassium | |
| Phosphate | 0.1112 |
| Salt | 0.155 |
| Xanthan Gum | 0.025 |
| Guar gum | 0.09 |
| Sunflower Lecithin | 0 |
| Stevia Extract | 0 |
| Vanilla Flavor | 0 |
| | 100 |

**TABLE 7**

| | % |
|---|---|
| Nut Butter | 2 |
| Water | 91.9279 |
| Sugar | 3 |
| CaCO3 | 0.268 |
| VitA | 0.00155 |
| VitD | 0.00085 |
| VitE | 0.01 |
| Dipotassium | |
| Phosphate | 0.1112 |
| Salt | 0.155 |
| Dextrin | 2.5 |
| Gellan Gum | 0.03 |
| Sunflower Lecithin | 0 |
| Stevia Extract | 0 |
| Vanilla Flavor | 0 |
| | 100 |

**TABLE 8**

| | % |
|---|---|
| Nut Butter | 1.75 |
| Water | 87.8398 |
| Sugar | 8.5 |
| CaCO3 | 0.4385 |
| VitA | 0.0011 |
| VitD | 0.0001 |
| VitE | 0.0131 |
| Vit B12 | 0.0001 |
| Riboflavin | 0.0002 |
| Zinc | 0.0036 |
| Dipotassium | |
| Phosphate | 0 |
| Salt | 0.1786 |
| Sodium Ascorbate | 0.03 |
| Dextrin | 0 |
| Locust Bean Gum | 0.0981 |
| Gellan Gum | 0.0320 |
| Sunflower Lecithin | 0.0400 |
| Stevia Extract | 0 |
| Vanilla Flavor | 0.075 |
| Cocoa | 0.5410 |
| Cocoa- Dark | 0.4590 |
| | 100 |

The example formula of TABLE 1 includes a lecithin. In particular, the formula of TABLE 1 includes sunflower lecithin in the amount of approximately 0.04% total weight (*e.g*., 3.6 grams for each 9000 grams). Although the formula of TABLE 1 shows 0.04% sunflower lecithin by weight or volume, any desired percentage of sunflower lecithin by weight or volume and/or one or more alternative soy-free lecithins may be used. For example, alternative embodiments may include sunflower lecithin within the range of 0% to 0.06% of total weight or volume. Although this embodiment includes a sunflower lecithin, other embodiments may include one or more alternative lecithins or may exclude a lecithin altogether without departing from the scope of the present disclosure.

The formula of TABLE 1 further includes almond nut butter in the amount of approximately 2% total weight (*e.g*., 180 grams for each 9000 grams). Although the formula of TABLE 1 shows 2% almond nut butter by weight, any desired percentage weight or volume of almond nut butter and/or nut butter derived from one or more alternative nut species may be used. For example, alternative embodiments may include a combination of almond and coconut nut butter within the range of 1% to 2% of total weight or volume. Although this embodiment includes an almond nut butter, other embodiments may include one or more alternative nut butters, pastes, flours, and/or purees without departing from the scope of the present disclosure.

The formula of TABLE 1 further includes the following health supplements and corresponding percentages of total weight or volume: 0.2948% calcium carbonate (CaCO3); 0.00102% vitamin A; 0.00012% vitamin D; and 0.0125% vitamin E. Although the formula of TABLE 1 shows 0.2948% calcium carbonate (CaCO3), 0.00102% vitamin A, 0.00012% vitamin D, and 0.0125% vitamin E, any desired percentage weight or volume of any suitable health supplement may be used, including the exclusion of health supplements entirely. For example, alternative embodiments may include as a fractional portion of total weight or volume: 0% to 0.3% calcium carbonate (CaCO3), 0% to 0.002% vitamin A, 0% to 0.01% vitamin D, 0% to 0.02% vitamin E, 0 to 3% dextrin, soy-free or soy-derived protein, and/or a fractional portion consisting of one or more alternative health supplements. Although this embodiment includes certain health-related supplements, other embodiments may include these and/or other desired health-related supplements without departing from the scope of the present disclosure.

The formula of TABLE 1 further includes the following salts and corresponding percentages of total weight or volume: 0.155% sea salt and 0.1112% dipotassium phosphate. Although the formula of TABLE 1 shows 0.155% sea salt and 0.1113% dipotassium phosphate, any desired percentage weight or volume of any suitable salts may be used, including the exclusion of salts entirely. For example, alternative embodiments may include as a fractional portion of total weight or volume: 0% to 0.2% sea salt, 0% to 0.2% dipotassium phosphate, 0% to 0.2% tricalcium phosphate, and/or a fractional portion consisting of one or more alternative salts. Although this embodiment includes certain salts, other embodiments may include these and/or other desired salts without departing from the scope of the present disclosure.

The formula of TABLE 1 further includes the following gums corresponding percentages of total weight or volume: 0.03% gellan gum, and 0.09% locust beam gum. Although the formula of TABLE 1 shows 0.03% gellan gum and 0.09% locust beam gum, any desired percentage weight or volume of any suitable gums may be used, including the exclusion of gums entirely. For example, alternative embodiments may include as a fractional portion of total weight or volume: 0% to 0.05% gellan gum, 0% to 1.2% locust bean gum, 0% to 1.2% guar gum, 0% to 0.03% xanthan gum, and/or a fractional portion consisting of one or more alternative gums. Although this embodiment includes certain gums, other embodiments may include these and/or other desired hydrocolloids without departing from the scope of the present disclosure.

The formula of TABLE 1 further includes sugar in the amount of approximately 3% total weight or volume (*e.g*., 270 grams for each 9000 grams). Although the formula of TABLE 1 shows 3% sugar by weight, any desired flavoring or combination of flavorings consisting of any suitable percentage weight or volume of the total weight of volume may be used. For example, some embodiments may include, as a fractional portion of total weight or volume, 0% to 10% sugar. Although this embodiment includes sugars, other embodiments may include these and/or other desired flavorings (*e.g*., vanilla, chocolate, fruit flavorings) without departing from the scope of the present disclosure. For example, the respective formulas of TABLES 2 and 4 both include vanilla flavoring in the amount of approximately 0.12% total weight or volume; however, any suitable percentage weight or volume may be used (*e.g*., percentages within the range of approximately 0.5% to 2%). As another example, the formulas of TABLES 3 and 4 include stevia extract in the amount of approximately 0.00555% and 0.006%, respectively, of total weight or volume; however, any suitable percentage weight or volume may be used (*e.g*., percentages with the range of approximately 0.003% to 0.01%). The example formula of TABLE 8 includes cocoa and cocoa-dark in the amount of approximately 0.5410% and 0.4590%, respectively; however, any suitable percentage weight or volume may be used (*e.g*., percentages with a range of approximately 0% to 2% for cocoa and/or 0% to 2% for cocoa-dark).

The formula of TABLE 1 further includes water in the amount of approximately 94.338% total weight (*e.g*., 8485.991 grams for each 9000 grams). Although the formula of TABLE 1 shows 94.338% water by weight, any desired percentage weight or volume of water may be used. For example, alternative embodiments may include water within the range of 90% to 95% of total weight or volume. In particular embodiments, the water used may be filtered water.

TABLE 9 illustrates example ranges of percentages by weight or volume for various ingredients that may be used in particular embodiments. As shown in TABLE 9, certain formulae may include a dry blend that constitutes 0-5% of total weight or volume. In this example, the dry blend may include one or more of the following ingredients: tricalcium phosphate (TCP); CaCO3; salt; dipotassium phosphate; locust bean gum; gellan gum; vitamin E; vitamin D; vitamin B12; riboflavin; zinc; xanthan gum; guar gum; and/or dextrin. In various embodiments, one or more ingredients (*e.g*., CaCO3) may be included within the dry blend and/or added separate from the dry blend.

**TABLE 9**

| | | % range |
|---|---|---|
| Water | | 70 - 99 |
| Sugar | | 0 - 10 |
| Nut Butter | | 0.1 - 10 |
| Cocoa | | 0 - 2 |
| Cocoa-Dark | | 0 - 2 |
| CaC03 | | 0 - 1 |
| Dry Blend | | 0 - 5 |
| | TriCalcium Phosphate (TCP) | 0 - 1 |
| | CaC03 | |
| | Salt | 0 - 0.5 |
| | Dipotassium Phosphate | 0 - 1 |
| | Locust Bean Gum | 0 - 0.5 |
| | Gellan Gum | 0 - 0.5 |
| | VitE | 0 - 0.1 |
| | VitA | 0 - 0.1 |
| | VitD | 0 - 0.1 |
| | Vit B12 | 0-0.1 |
| | Riboflavin | 0 - 0.1 |
| | Zinc | 0 - 0.1 |
| | Xanthan Gum | 0 - 0.5 |
| | Guar Gum | 0 - 0.5 |
| | Dextrin | 0 - 5 |
| Stevia Extract | | 0 - .1 |
| Sodium Ascorbate | | 0 - 0.2 |
| Sunflower Lecithin | | 0 - 0.1 |
| Natural Flavor | | 0 - 2 |
| Natural Flavor (Vanilla) | | 0 - 2 |
| | | 100 |

The components of the systems and apparatuses disclosed herein may be integrated or separated. Moreover, the operations of the systems and apparatuses may be performed by more, fewer, or other components. The methods may include more, fewer, or other steps. For example, in various embodiments, some or all of the sugar optionally added in step 106 and/or the lecithin optionally added in step 110 may form a portion of the dry blend added in step 108, such that steps 106 and/or 110 may be wholly or partially combined with step 108. Additionally, steps may be performed in any suitable order.

Although the present disclosure has been described above in connection with several embodiments, a myriad of changes, substitutions, variations, alterations, transformations, and modifications may be suggested to one skilled in the art, and it is intended that the present invention encompass such changes, substitutions, variations, alterations, transformations, and modifications as fall within the spirit and scope of the appended claims. For example, although the present disclosure has been described in the context of mass production, the teachings of the present disclosure may be applied on a smaller scale. In particular, the ingredients disclosed herein may be combined and mixed manually as opposed to combining and/or mixing the ingredients by machine.

To aid the Patent Office, and any readers of any patent issued on this application in interpreting the claims appended hereto, applicants wish to note that they do not intend any of the appended claims to invoke paragraph 6 of 35 U.S.C. § 112 as it exists on the date of filing hereof unless the words "means for" or "step for" are explicitly used in the particular claim.

## Claims

1. A method for making non-dairy, nut-based milk, the method comprising:
mixing water and nut butter; and
adding a dry blend comprising:
one or more hydrocolloids selected from the group consisting of:
gellan gum;
guar gum;
locust bean gum; and
xanthan gum; and
one or more salts;
wherein the non-dairy, nut-based milk is substantially free of soy-derived ingredients.

2. The method of Claim 1, further comprising preheating the non-dairy, nut-based milk to a temperature within the range of approximately 150 to 200 degrees Fahrenheit before exposing the non-dairy, nut-based milk to steam injection.

3. The method of Claim 1, or Claim 2, further comprising adding a sunflower-based lecithin.

4. The method of Claim 1, or Claim 2, or Claim 3, wherein the nut butter comprises less than or equal to ten percent of the net weight of the non-dairy, nut-based milk.

5. The method of Claim 1, or any preceding claim, wherein the water comprises between 70 and 99 percent of the net weight of the non-dairy, nut-based milk.

6. The method of Claim 1, or any preceding claim, further comprising adding a stevia extract.

7. The method of Claim 1, or any preceding claim, wherein the one or more salts comprises one or more buffering salts selected from the group consisting of a potassium phosphate and a calcium phosphate.

8. The method of Claim 1, or any of Claims 2 to 6, wherein the one or more salts are not buffering salts.

9. A method for making non-dairy, nut-based milk, the method comprising:
obtaining nut butter;
mixing the nut butter with water; and
homogenizing the water and nut butter mixture using a maximum homogenization pressure of at least 20,000 pounds per square inch (psi).

10. The method of Claim 9, or any of Claims 1 to 8, further comprising exposing the non-dairy, nut-based milk to steam injection, and optionally or preferably the method further comprising preheating the non-dairy, nut-based milk to a temperature within the range of approximately 150 to 200 degrees Fahrenheit before exposing the non-dairy, nut-based milk to steam injection.

11. The method of Claim 9, or of Claim 10, or of any of Claims 1 to 8, wherein the non-dairy, nut-based milk is substantially free of one or more ingredients selected from the group consisting of:
hydrocolloids;
soy-derived ingredients;
lecithins; and
buffering salts; or
the method of Claim 16 wherein the non-dairy, nut-based milk is substantially free of one or more ingredients selected from the group consisting of:
hydrocolloids;
soy-derived ingredients;
lecithins; and
buffering salts.

12. The method of Claim 9, or of Claim 10, or Claim 11, or of any of Claims 1 to 8, wherein the nut butter comprises less than or equal to ten percent of the net weight of the non-dairy, nut-based milk.

13. The method of Claim 9, or of any of Claims 10 to 12, or of any of Claims 1 to 8, wherein the water comprises between 70 and 99 percent of the net weight of the non-dairy, nut-based milk.

14. The method of Claim 9, or of any of Claims 10 to 13, or of any of Claims 1 to 8, further comprising adding at least one of:-
(i) flavoring; or
(ii) a stevia extract.

15. The method of any preceding claim, wherein the dry blend further comprises one or more health supplements.

16. A method for making non-dairy, nut-based milk, the method comprising:
obtaining nut butter;
mixing the nut butter with water;
preheating the non-dairy, nut-based milk to a temperature within the range of approximately 150 to 200 degrees Fahrenheit;
exposing the non-dairy, nut-based milk to steam injection; and
homogenizing the non-dairy, nut-based milk.

17. The method of Claim 16, wherein homogenizing the non-dairy, nut-based milk comprises using a maximum homogenization pressure of at least 20,000 pounds per square inch (psi).
